# EUROPEAN PATENT SPECIFICATION

(11) **EP 3 541 669 B1**
(45) Date of publication and mention of the grant of the patent: **22.09.2021**
(21) Application number: 17917713.4
(22) Date of filing: 17.11.2017
(51) Int. Cl.: B60S 1/26, B60S 1/16, B60S 1/34

(54) **A WIPER MECHANISM**
SCHEIBENWISCHERMECHANISMUS
MÉCANISME D'ESSUIE-GLACE

(30) Priority: 18.11.2016 TR 201616766
(43) Date of publication of application: 25.09.2019
(73) Proprietor: FORD OTOMOTIV SANAYI ANONIM SIRKETI, Istanbul (TR)
(72) Inventor: ERBEYLER, Seckin Ali, 34885 Sancaktepe/Istanbul (TR); ULU, Levent Mert, Istanbul (TR); EROGLU, Aykut, Kocaeli (TR); ERSUNAY, Kaan, Istanbul (TR)
(74) Representative: Dericioglu, E. Korhan
(86) International application number: PCT/TR2017/050573
(87) International publication number: WO 2019/013722

(56) References cited:
- CN-A- 104 401 298
- CN-A- 104 527 584
- CN-U- 204 355 000
- CN-Y- 201 193 018
- JP-A- S6 463 440

## Description

### Field of the Invention

The present invention relates to a wiper mechanism which is formed for wiping the windshields of vehicles and which, by cleaning the window in rainy and snowy weather conditions, prevents blocking the driver's view.

### Background of the Invention

One of the most important systems provided in the vehicles used today is the windshield wiper systems. The wipers typically used for the windshield of the vehicles may be disposed in the rear window in some vehicles as well. As the wiper system wipes the vehicle glass, the driver's view is not hindered in rainy, snowy weather conditions. As mentioned above, the windshields and rear windows of the vehicles are generally provided with a wiper system; in addition, however, wiper systems may also be disposed in the headlights. The wiper system can be operated not only in rainy, snowy weather but also according to the driver's preference so as to clean the windshield and rear window of the vehicle in a quick manner. In the vehicles today, the wiper systems are electronically-controlled. The windshields of next generation vehicles are provided thereon with a rain sensor. The rain sensors which sense the rain or water transmits information to the electronic control system, thereby automatically operating the wipers. The advanced types of such system are also provided with the function of adjusting the wiper speed based on the rainfall intensity. The windshield wiping assembly is of utmost importance since it directly affects the driver's field of view. In case of any precipitation condition, the windshield wipers should ideally scrape off the rain water or rain drops accumulating on the glass and blocking the view, in a quick manner.

The windshield washing and wiping assembly basically comprises: a wiping motor, mechanical link rods, wiper rubbers, glass washer fluid reservoir and pump, and control arm. The most important component of the windshield wiping mechanism is the wiping motor. The wiping motor drives the mechanical wiper arms. In addition, the system also comprises, on the motor body, elements ensuring that the wipers automatically assume their original position and consisting of a relay and switch. The mechanical wiper mechanism, on the other hand, comprises wiper arms and connectors. Another important component of the system is wiper rubbers. The wiper rubbers serve for scraping off the water, snow, hailstone, dust or dirt accumulating on the glass.

The system is typically operated as below. When the control arm disposed near the steering wheel is moved, the battery voltage passes the contact switches and control arms, reaching the wiper motor. The rotational movement of the wiper motor is transformed into discontinuous right-hand and left-hand linear movement of the wiper arms in the mechanical wiping assembly. The wipers thus cleans the glass. The properties of the wiping assembly are: When the right-hand control arm is moved in downward direction in different stages, it operates at different speeds. As long as the control arm is maintained at such stages, the wiper continues operating; however, it stops when released. In this way, the windshield of the vehicle is cleaned as desired.

The wiper drive mechanisms used today typically comprise pulley drive mechanisms. The rotational force from the wiper motor is transferred to the wiper by means of said pulley mechanism, and thus enabling the wiper to rotate. Since pulley arms are used in the mechanism of prior art, a large space is needed for locating said mechanism in the vehicle, which, in turn, causes material abrasion.

The U.S. Patent Application No. US20070271722A1 in the state of the art discloses a wiper drive mechanism. This wiper drive mechanism is provided with more than one gears and a rack for transmission. The movement transferred to the gear by way of a motor is then transferred to two different wipers, which are capable of moving either in opposite or the same direction as desired. It is aimed, by utilizing a motor, to ensure the coordinated movement of the wipers either in opposite or the same directions depending on the positioning of the connection member transmitting the movement and disposed in the middle of the wipers. It is disclosed herein that a reduction gear is optionally used, which may also be a worm gear, such that they will be entirely arranged inside; and also they may be provided for reducing the motor speed and increase the torque of the drive mechanism. A spring and similar elements are used in the mechanism used in this document. When this prior art document and the present invention are compared, in the prior art document a shaft is connected to the wiper arms and said shaft moves along a horizontal axis, whereby the angular rotation of the wiper arms is defined. In the present invention, however, the shaft reaching the wiper arms is fixed and rotates around its own axis. Moreover, the portions of said shaft that are integrated with the wiper arms are each provided with worm gears. The wiper arms are capable of performing angular rotational movement thanks to the integrated nature of said worm gear with the wiper arm.

The U.S. Patent Application No. US7412744 B2 in the state of the art discloses a wiper mechanism developed for an automobile rear-view mirror. Also in this wiper mechanism, the movement from a motor is transferred to the windscreen wiper by means of a worm gear, a connecting rod, and other rotating elements. In this document, the movement transferred to the wiper is done so as a turning-rotating movement but not as any translating movement. Thus, the wiper is capable of wiping the rear-view mirror. It is aimed with this wiper mechanism to enable the driver to clearly watch the traffic conditions reflected in the rear-view mirror and drive safely. When this prior art document and the present invention are compared, the mentioned prior art document is used in rear-view windows and it is a wiper system which utilizes an entirely different wiping technique. The present invention differs from the document in the state of the art in that the former is used for a different window and provides the advantage controlling two wipers simultaneously.

In the U.S. Patent Application No. US7294986 B2 in the state of the art, a windshield wiper system is disclosed. The mechanism disclosed in this system has a servo motor and worm gear, whereby the wiper is driven. It is mentioned, however, in the invention according to this prior art document that more than one wipers are interconnected and driven by means of connectors, instead of transmission of the movement to more than one wipers by way of worm gears and other components located under the other wiper arms. In the present invention, on the other hand, the wiper arms are angularly moved with a fixed shaft rotating around its own axis and the wiper arms disposed at both ends of such shaft making the wiper arms rotate.

None of the wiper mechanisms used today are provided with a worm gear at both ends of a fixed shaft, nor any one such wiper mechanisms are capable of driving the wiper arms by such fixed shaft rotating around its own axis. CN-A-104401298 shows the preamble of claim 1.

### Objects of the Invention

The object of the present invention is to provide a wiper mechanism which is used in motor vehicles and has a shaft capable of rotating around its own axis. Another object of the present invention is to provide a wiper mechanism having a shaft with worm gears at both ends.

And another object of the present invention is to provide a wiper mechanism, wherein the movement is transferred to the wiper arms upon rotating the shaft around its own axis.

### Summary of the Invention

The wiper mechanism having been developed in order to achieve the objects of the present invention and defined in the first claim and other claims dependent thereon generally comprises a motor, a set of cone gears, a set of shafts, and also a drive mechanism. The motor is activated by the command received from the vehicle control unit. Upon the activation of the motor, the motor shaft rotates around its own axis and thus makes the set of cone gears rotate. The set of cone gears is connected to the set of shafts. Therefore, when the set of cone gears is rotated, the set of shafts rotates as well, and the thus formed rotational force is transferred to the drive mechanism by means of the worm gears disposed at both ends of the set of shafts. The drive mechanism is provided with a spur gear which is rotated by the worm gear. Disposed at the center of said spur gear is a pinion gear. Said pinion gear, on the other hand, is connected to the wiper arm. In case the pinion gear rotates around its own axis, the wiper arm also performs angular movement around the central axis of said pinion gear, thereby allowing the glass to be wiped. An easy to use and apply mechanism is achieved owing to the fact that the wiper mechanism comprises a set of shafts rotating around their own axes and that both wiper arms are driven simultaneously.

### Detailed Description of the Invention

The wiper mechanism which has been developed for achieving the objects of the present invention is illustrated in the accompanying drawings, in which:

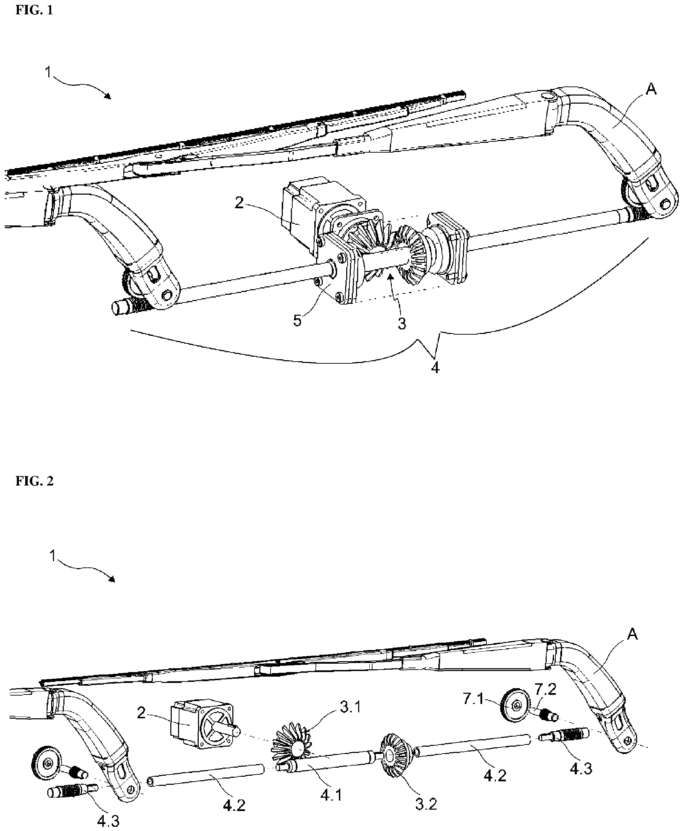

- **Fig. 1.**: Perspective view of the wiper mechanism.
- **Fig. 2.**: Exploded perspective view of the wiper mechanism.

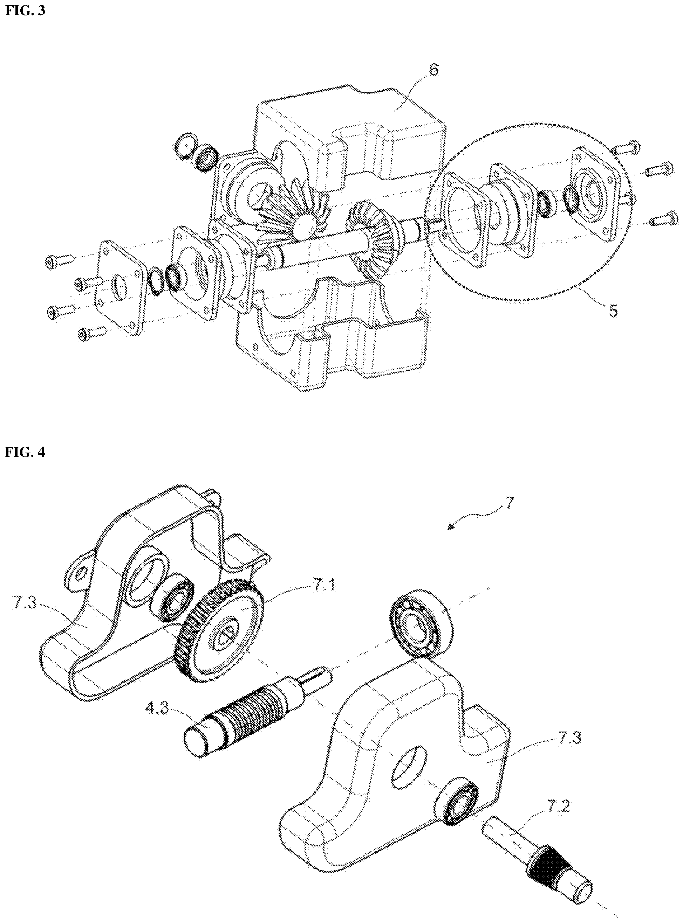

- **Fig. 3.**: Perspective view of the set of cone gears and the housing portion.
- **Fig. 4.**: Exploded perspective view of the drive mechanism.

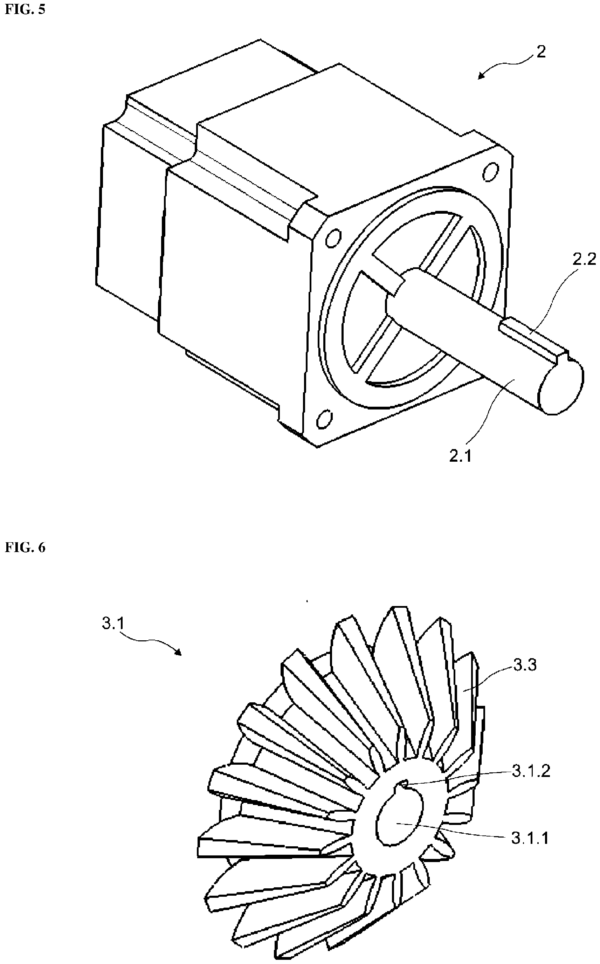

- **Fig. 5.**: Perspective view of the motor.
- **Fig. 6.**: Perspective view of the drive gear.

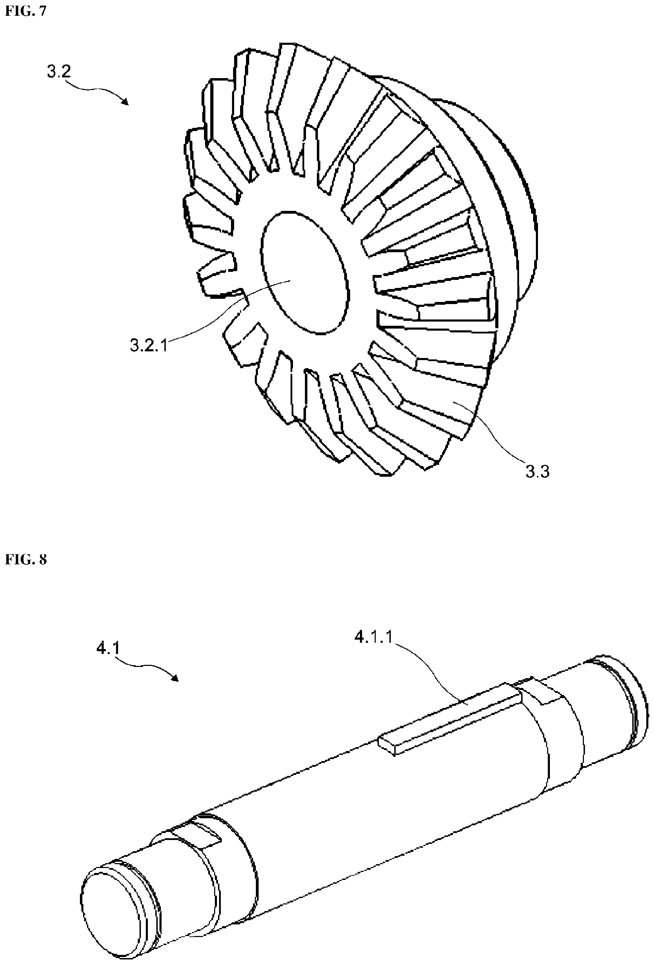

- **Fig. 7.**: Perspective view of the transmission gear.
- **Fig. 8.**: Perspective view of the main shaft.

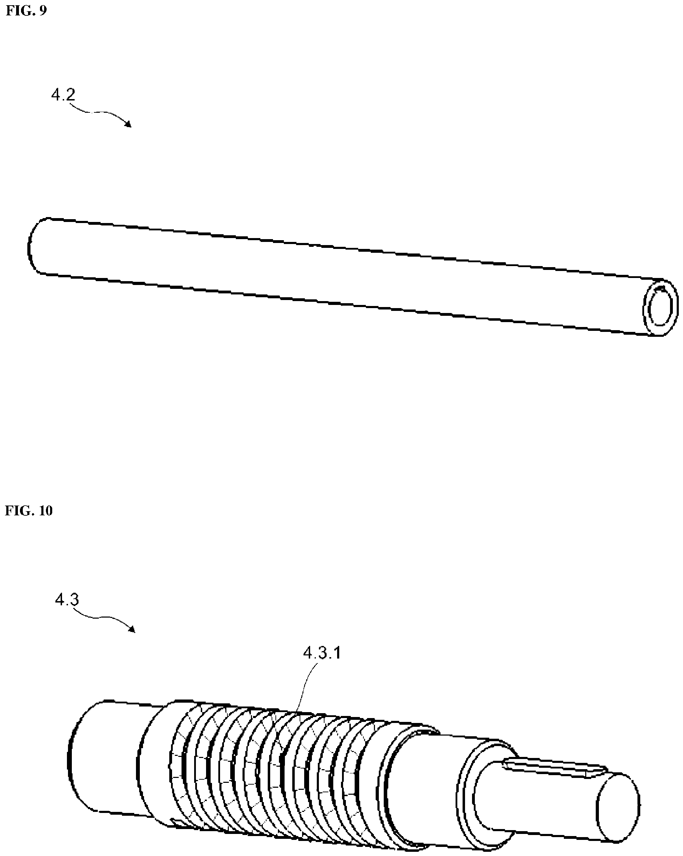

- **Fig. 9.**: Perspective view of the transmission shaft.
- **Fig. 10.**: Perspective view of the worm gear.

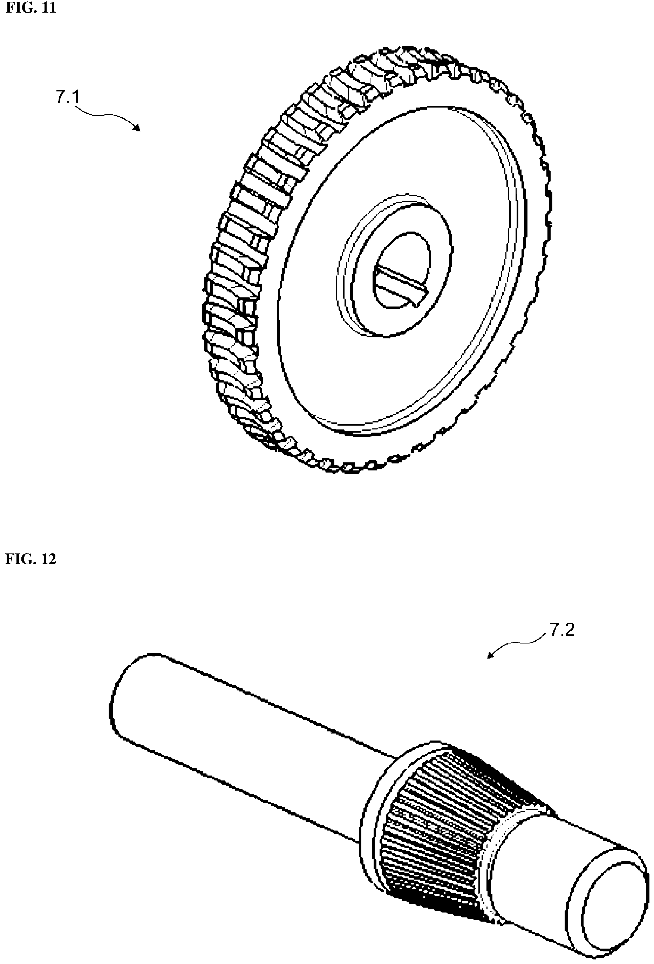

- **Fig. 11.**: Perspective view of the spur gear.
- **Fig. 12.**: Perspective view of the pinion gear.

The parts shown in the drawings are enumerated individually and the reference numerals corresponding thereto are given below.
**1.** Wiper mechanism
**2.** Motor
   **2.1.** Motor shaft
   **2.2.** Shaft key
**3.** Set of cone gears
   **3.1.** Drive gear
      **3.1.1.** Motor shaft bearing
      **3.1.2.** Key groove
   **3.2.** Transmission gear
      **3.2.1.** Main shaft bearing
   **3.3.** Conical threads
**4.** Set of shafts
   **4.1.** Main shaft
      **4.1.1.** Drive cam
   **4.2.** Transmission shaft
   **4.3.** Worm gear
      **4.3.1.** Helical threads
**5.** Set of shafts bearing
**6.** Housing
**7.** Drive mechanism
   **7.1.** Spur gear
   **7.2.** Pinion gear
   **7.3.** Mechanism housing
**A.** Wiper arm

The wiper mechanism (1) which is formed for wiping the windshields of vehicles and which, by cleaning the window in rainy and snowy weather conditions, prevents blocking the driver's view mainly comprises:
- at least one motor (2) which drives each wiper arm (A) and thus allows them to move,
- at least one set of cone gears (3) which has a drive gear (3.1) connected to the motor (2) and rotating around its own axis driven by the motor (2), and which also comprises a transmission gear (3.2) which rotates in synchronization with the drive gear (3.1) as being positioned 90° with respect to the central axis of said drive gear (3.1),
- at least one set of shafts (4) which is located in the main shaft bearing (3.2.1) disposed in the middle portion of the transmission gear (3.2) and rotates around its own axis in synchronization with the transmission gear (3.2), and which at the same time is provided with a worm gear (4.3) at both ends thereof, and
- a drive mechanism (7) which is driven by the rotational movement formed in the worm gear (4.3), and which also rotates the wiper arm (A) angularly around the central axis of the pinion gear (7.2) by way of a spur gear (7.1) rotated by the worm gear (4.3) and a pinion gear (7.2) disposed at the center of said spur gear (7.1).

The wiper mechanism (1) in an embodiment of the invention has a motor (2). Said motor (2) receives signal from the control unit of the vehicle and is driven by this signal. When the sensors are activated in case the vehicle driver prefers to move the wiper arms (A) or in case of weather conditions such as rain, snow, the vehicle control unit signals the motor (2), and thus drives the motor (2). The motor (2) used in this embodiment of the invention is a servo motor. Thanks to the servo motor being used as a motor (2), it can be controlled at the preferred angle and speed and is capable of moving based on the commands that it receives from the control unit, at both directions. A motor shaft (2.1) is arranged at the center of the motor (2). Said motor shaft (2.1), on the other hand, rotates around its own axis with the drive formed in the inner portion of the motor (2), said motor (2) being used as an intermediate element for driving the component connected thereto. The motor shaft (2.1) is further provided with a shaft key (2.2). As for the shaft key (2.2), it is a machine part used for locking the component to be engaged with the motor shaft (2.1) through the motor shaft (2.1). After the machine part to be located in the motor shaft (2.1) is positioned in the motor shaft (2.1), the shaft key (2.2) is attached, this component and the motor shaft (2.1) being thus integrated with one another.

The wiper mechanism (1) in an embodiment of the invention is provided with a set of cone gears (3). The set of cone gears (3), on the other hand, operates in connection with the motor shaft (2.1) so that the drive obtained from the motor (2) through the motor shaft (2.1) will be directed from one axis to another. Said set of cone gears (3) has a drive gear (3.1). The drive gear (3.1) is directly engaged in the motor shaft (2.1) of the motor (2) through the motor shaft bearing (3.1.1), thereby being integrated with and secured in the motor shaft (2.1). The motor shaft bearing (3.1.1) of the drive gear (3.1) is provided with a key groove (3.1.2), wherein the shaft key (2.2) placed in the motor shaft (2.1) also fits in the key groove (3.1.2) arranged in the drive gear (3.1); hence, the drive gear (3.1) and the motor shaft (2.1) are fully integrated with one another. Since the drive gear (3.1) and the motor shaft (2.1) are mounted as such, when the motor shaft (2.1) rotates around its own axis, the drive gear (3.1) rotates with the same angular speed as well. The set of cone gears (3) is provided with a transmission gear (3.2), the axis of which is located in a perpendicular axis to the central axis of the drive gear (3.1). Just as the drive gear (3.1), the transmission gear (3.2) also comprises a main shaft bearing (3.2.1) in the central portion thereof. When the drive gear (3.1) rotates upon being driven by the motor (2), the transmission gear (3.2) rotates at the same angular speed as the drive gear (3.1) and in synchronization therewith and transmits the rotational force formed in the drive gear (3.1) axis to the transmission gear (3.2) axis. Thanks to the synchronized operation of the drive gear (3.1) and the transmission gear (3.2), the rotational force formed in an axis by means of the motor (2) as mentioned above is transferred to another axis which is 90° with respect to that axis. The drive gear (3.1) and the transmission gear (3.2) are both provided with virtually identical conical threads (3.3), wherein said conical threads (3.3) mesh with one another, and thus the rotational force formed in the drive gear (3.1) is directly and synchronically transferred to the transmission gear (3.2).

In the wiper mechanism (1) in an embodiment of the invention, there exists a set of shafts (4) engaged in the main shaft bearing (3.2.1) disposed at the center of the transmission gear (3.2) and rotating around their own axes and in synchronization with the transmission gear (3.2). In the wiper mechanism (1), said set of shafts (4) is mounted in the transmission gear (3.2) so that the rotational force formed in the motor (2) will be transferred to each wiper arm (A). With the transmission gear (3.2) rotating in synchronization with the set of shafts (4), all of the wipers provided in the vehicle windshield can be rotated at the same speed and same angle. In this embodiment of the invention, the set of shafts (4) preferably has a three-piece configuration. The set of shafts (4) provided in this embodiment of the invention comprises: a main shaft (4.1), one transmission shaft (4.2) for being mounted in each end of the main shaft (4.1) and rotating together with the main shaft (4.1), and one worm gear (4.3) for being located at each end of the transmission shafts (4.2) on which the main shaft (4.1) is not disposed and rotates together with the main shaft (4.1), and the same time carries this rotational movement to a different axis. There exist helical threads (4.3.1) on the worm gear (4.3), wherein such helical threads (4.3.1) rotates the spur gear (7.1) around its own axis in case the worm gear (4.3) is rotated around its own axis. The set of shafts (4) can be produced as three-piece in this embodiment of the invention, and yet in a different embodiment of the invention said set of shafts (4) can be produced as single-piece and with worm gears (4.3) at both ends. A drive cam (4.1.1) is located in the main shaft bearing (3.2.1) and the main shaft (4.1) in order that the main shaft (4.1) and the transmission gear (3.2) operate in synchronization with one another; thus, the main shaft (4.1) located at the center of the transmission gear (3.2) rotates along with the transmission gear (3.2). The main shaft (4.1) and the transmission shafts (4.2) also have a similar key coupling, which, in turn, enables the transmission shafts (4.2) to rotate in synchronization with the main shaft (4.1).

In the wiper mechanism (1) in an embodiment of the invention, the position assumed by the set of shafts (4) together with the transmission gear (3.2) is maintained by means of a set of shafts bearing (5). The set of shafts bearing (5) embeds the set of shafts (4) during the rotation thereof around their own axes and also when they are immobile by way of more than one bearings, and with such bearings comprised thereby, the rotation of the set of shafts (4) around their own axes is facilitated. The set of shafts bearing (5) is the configuration ensuring that the drive gear (3.1) and the set of shafts (4) are all maintained in a pre-determined position.

In the wiper mechanism (1) in an embodiment of the present invention, the housing (6) protects the set of cone gears (3) against damaging factors like dust, dirt, etc. The housing (6) is positioned between the set of shafts bearing (5) and encloses the set of cone gears (3) as well as a part of the set of shafts (4), preventing damaging factors from entering therein. The housing (6) provided in one embodiment of the invention is preferably a two-piece configuration and creates a void volume by being interlocked. The aforementioned set of cone gears (3) is arranged in said volume, thereby providing protection against damaging factors.

The wiper mechanism (1) in an embodiment of the invention is also provided with a drive mechanism (7). The drive mechanism (7), on the other hand, is the mechanism whereby the rotational force transferred to the set of shafts (4) through the motor (2) is transmitted to the wiper arms (A). The drive mechanism (7) in this embodiment of the invention preferably consists of a spur gear (7.1), a pinion gear (7.2), and also a mechanism housing (7.3). The spur gear (7.1) disposed in the drive mechanism (7) is directly located on the worm gear (4.3). The spur gear (7.1) provided in this embodiment of the present invention preferably has a circular geometry and is a gear capable of rotating around its own axis. Said spur gear (7.1) is directly in contact with the helical threads (4.3.1) arranged in the worm gear (4.3) and rotates around its own axis due to the force transferred by means of such helical threads (4.3.1). Disposed at the center of the spur gear (7.1) is a pinion gear (7.2). The pinion gear (7.2), on the other hand, rotates together with the rotating spur gear (7.1) at the same angular speed as and in synchronization with it, and transfers the rotational force that it receives from the spur gear (7.1) directly to the wiper arm (A). Disposed at one side of the pinion gear (7.2) is a conical thread, said conical threads being connected to the wiper arm (A), whereby in case of rotation of the pinion gear (7.2) around its own axis, the wiper arm (A) is also capable of rotating around the axis intersecting the center of the pinion gear (7.2) in a preferred angle.

The wiper mechanism (1) in an embodiment of the invention operates as follows. The motor (2) provided in the wiper mechanism (1) is driven by a signal from the vehicle control unit. Upon said signal being delivered to the motor (2), the motor (2) is activated and makes the motor shaft (2.1) rotate around its own axis. In case the motor shaft (2.1) rotates around its own axis, the drive gear (3.1) also rotates around its own axis together with the motor shaft (2.1). Said drive gear (3.1) transfers the rotational force to a transmission gear (3.2) located 90° with respect thereto. A set of shafts (4) is disposed at the center of the transmission gear (3.2). Said set of shafts (4), on the other hand, rotates together with the transmission gear (3.2) as well as with the drive gear (3.1). Disposed at both ends of the set of shafts (4) are worm gears (4.3), wherein said worm gears (4.3) rotates along with the rotation of the set of shafts (4) around their own axes. There exist helical threads (4.3.1) on the worm gear (4.3). Such helical threads (4.3.1) transfers the force that they receive from the set of shafts (4) directly to the spur gear (7), and thus changing the axis of the rotational movement. Since the spur gear (7.1) is integrated with the pinion gear (7.2), the spur gear (7.1) and the pinion gear (7.2) rotate in synchronization with one another. Therefore, the rotational force formed in the spur gear (7.1) is also formed in the pinion gear (7.2). Moreover, said pinion gear (7.2) is connected to the wiper arm (A). Hence, in case the pinion gear (7.2) rotates around its own axis, the wiper arm (A) also rotates angularly around the central axis of said pinion gear (7.2). Said angular rotation proceeds until a certain angle, and after this angle the wiper arm (A) stops instantly. From this moment on, the motor (2) is subject to rotation in reverse direction in this instance, in which case the entire mechanism, and hence the wiper arm (A) moves in reverse direction. After the movement of the wiper arm (A) in reverse direction, the wiper arm (A) assumes its original position again.

How much as well as the frequency at which the wiper arm (A) will be rotated varies depending on the signal delivered to the motor (2) by the control unit. The signal from the control unit, on the other hand, varies according to the position to which the driver brings the wiper arm, or the information delivered to the control unit by the vehicle sensors. When the driver or sensors send(s) an information to the control unit regarding the rapid operation of the wiper arm (A), the control unit accordingly sends a drive signal to the motor (2), and thus determining the rotational speed of the motor (2). Repetition of this operation continuously allows the vehicle glass to be cleaned by means of the wiper arms (A).

An easy to use and apply mechanism (1) is achieved owing to the fact that the wiper mechanism (1) enables the set of shafts (4) rotating around their own axes to drive both of the wiper arms (A) simultaneously.

## Claims

1. A wiper mechanism (1) which is formed for wiping the windshields of vehicles and which, by cleaning the window in rainy and snowy weather conditions, prevents blocking the driver's view, mainly **comprising:**
- at least one motor (2) which drives each wiper arm (A) and thus allows them to move,
- at least one set of cone gears (3) which has a drive gear (3.1) connected to the motor (2) and rotating around its own axis driven by the motor (2), and which also comprises a transmission gear (3.2) which rotates in synchronization with the drive gear (3.1) as being positioned 90° with respect to the central axis of said drive gear (3.1), and **characterized by**
- at least one set of shafts (4) which is located in the main shaft bearing (3.2.1) disposed in the middle portion of the transmission gear (3.2) and rotates around its own axis in synchronization with the transmission gear (3.2), and which at the same time is provided with a worm gear (4.3) at both ends thereof, and
- a drive mechanism (7) which is driven by the rotational movement formed in the worm gear (4.3), and which also rotates the wiper arm (A) angularly around the central axis of the pinion gear (7.2) by way of a spur gear (7.1) rotated by the worm gear (4.3) and a pinion gear (7.2) disposed at the center of said spur gear (7.1).

2. The wiper mechanism (1) as in Claim 1, **characterized by** a set of cone gears (3) which operates in connection with the motor shaft (2.1) so that the drive obtained from the motor (2) through the motor shaft (2.1) will be directed from one axis to another.

3. The wiper mechanism (1) as in Claim 1, **characterized by** a set of cone gears (3) the axis of which is arranged in an axis perpendicular to the central axis of the drive gear (3.1) and which comprises a main shaft bearing (3.2.1) in the middle portion thereof, and which also comprises a transmission gear (3.2) which, when the drive gear (3.1) rotates upon being driven by the motor (2), rotates at the same angular speed as the drive gear (3.1) and in synchronization therewith and by which the rotational force formed in the drive gear (3.1) axis is transmitted.

4. A wiper mechanism (1) as in Claim 1, **characterized by** a set of cone gears (3) which comprises conical threads (3.3) provided both in the drive gear (3.1) and in the transmission gear (3.2) and ensuring that the rotational force formed in the transmission gear (3.1) is directly and synchronically transferred to the transmission gear (3.2).

5. A wiper mechanism (1) as in Claim 1, **characterized by** a set of shafts (4) engaged in the main shaft bearing (3.2.1) disposed at the center of the transmission gear (3.2) and rotating around their own axes in synchronization with the transmission gear (3.2); which is also mounted in the transmission gear (3.2) so that the rotational force formed in the motor (2) is transferred to each one of the wiper arms (A).

6. A wiper mechanism (1) as in Claim 1, **characterized by** a set of shafts (4) comprising a main shaft (4.1), one transmission shaft (4.2) for being mounted in each end of the main shaft (4.1) and rotating together with the main shaft (4.1), and one worm gear (4) for being located at each end of the transmission shafts (4.2) on which the main shaft (4.1) is not disposed and rotates together with the main shaft (4.1), and the same time carries this rotational movement to a different axis.

7. A wiper mechanism (1) as in Claim 6, **characterized by** a set of shafts (4) comprising a worm gear (4.3) on which helical threads (4.3.1) are provided and which, in case of being rotated around its own axis, rotates the helical threads (4.3.1) and the spur gear (7.1) around their own axes.

8. A wiper mechanism (1) as in Claim 6, **characterized by** a set of shafts (4) comprising a drive cam (4.1.1) which allows the main shaft (4.1) and the transmission gear (3.2) to operate in synchronization with one another and which is located in the main shaft bearing (3.2.1) and the main shaft (4.1); and which also helps the main shaft (4.1) located at the center of the transmission gear (3.2) to rotate along with the transmission gear (3.2).

9. The wiper mechanism (1) as in Claim 1, **characterized by** a set of shafts bearing (5) which enables the set of shafts (4) to rotate around their own axes by means of one or more bearings maintaining the position assumed by the set of shafts (4) together with the transmission gear (3.2); and which embeds the set of shafts (4) while said set of shafts (4) is immobile.

10. The wiper mechanism (1) as in Claim 1, **characterized by** a housing (6) which protects the set of cone gears (3) against damaging factors like dust, dirt, etc. and is located between the set of shafts bearings (5); which at the same time encloses the set of cone gears (3) as well as a part of the set of shafts (4), preventing damaging factors from entering therein.

11. The wiper mechanism (1) as in Claim 1, **characterized by** a drive mechanism (7) which transmits the rotational force transferred to the set of shafts (4) through the motor (2), to the wiper arms (A) and which comprises a spur gear (7.1) and a pinion gear (7.2).

12. The wiper mechanism (1) as in Claim 1, **characterized by** a drive mechanism (7) comprising a spur gear (7.1) which is disposed in the drive mechanism (7) and is directly located on the worm gear (4.3); which is also directly in contact with the helical threads (4.3.1) arranged in the worm gear (4.3) and rotates around its own axis due to the force transferred by means of such helical threads (4.3.1).

13. The wiper mechanism (1) as in Claim 1, **characterized by** a drive mechanism (7) comprising a pinion gear (7.2) which is arranged at the center of the spur gear (7.1) and rotates together with the rotating spur gear (7.1) at the same angular speed as and in synchronization with it, and at the same time transfers the rotational force that it receives from the spur gear (7.1) directly to the wiper arm (A).

14. The wiper mechanism (1) as in Claim 1, **characterized by** a drive mechanism (7) comprising a pinion gear (7.2) which has conical threads connected to the wiper arm (A) at one side thereof, whereby in case of rotation of the pinion gear around its own axis, the wiper arm (A) is also capable of rotating around the axis intersecting the center thereof in a preferred angle.

## Patentansprüche

1. Wischennechanismus (1), der zum Wischen der Windschutzscheiben von Fahrzeugen ausgebildet ist, durch Reinigen des Fensters bei Regen- und Schneewetter, verhindert das Blockieren der Fahrersicht, hauptsächlich **umfassend:**
- mindestens einen Motor (2), der jeden Wischerarm (A) antreibt und somit deren Bewegung ermöglicht,
- mindestens ein Set von Konusgetriebe (3), das ein mit dem Motor (2) verbundenes und um seine eigene, vom Motor (2) angetriebene Achse drehendes Antriebszahnrad (3.1) aufweist, und das auch ein Übersetzungsgetriebe (3.2) umfasst, welches sich synchron zu dem Antriebszahnrad (3.1) dreht, da es um 90° in Bezug auf die Mittelachse des genannten Antriebszahnrads (3.1) angeordnet ist, und **gekennzeichnet durch**
- mindestens einen Antriebsmechanismus (4), der in dem im Mittelteil des Übertragungsgetriebes (3.2) angeordneten Hauptwellenlager (3.2.1) angeordnet ist und sich synchron zu dem Übertragungsgetriebe (3.2) um seine eigene Achse dreht, und der gleichzeitig an beiden Enden mit einem Schneckengetriebe (4.3) vorgesehen ist, und
- einen Antriebsmechanismus (7), der durch die im Schneckengetriebe (4.3) gebildete Drehbewegung angetrieben ist und der auch den Wischerarm (A) über ein vom Schneckengetriebe (4.3) gedrehtes Stirnrad (7.1) und ein in der Mitte des genannten Stirnrads (7.1) angeordnetes Ritzel (7.2) winklig um die Mittelachse des Ritzels (7.2) dreht.

2. Wischermechanismus (1) nach Anspruch 1, **gekennzeichnet durch** ein Set von Konusgetriebe (3), die in Verbindung mit der Motorwelle (2.1) arbeiten, so dass der vom Motor (2) durch die Motorwelle (2.1) erhaltene Antrieb von einer Achse zur anderen gerichtet ist.

3. Wischennechanismus (1) nach Anspruch 1, **gekennzeichnet durch** einen Set von Konusgetriebe (3), deren Achse in einer Achse senkrecht zur Mittelachse des Antriebszahnrades (3.1) angeordnet ist und die in ihrem Mittelteil ein Hauptwellenlager (3.2.1) umfasst, und welche ferner ein Übersetzungsgetriebe (3.2), das sich, wenn sich das Antriebsrad (3.1) beim Antrieb durch den Motor (2) dreht, mit der gleichen Winkelgeschwindigkeit wie das Antriebsrad (3.1) und dazu synchron dreht und durch das die in der Achse des Antriebszahnrads (3.1) gebildete Rotationskraft übertragen ist, umfasst.

4. Wischermechanismus (1) nach Anspruch 1, **gekennzeichnet durch** ein Set von Konusgetriebe (3), das konische Gewinden (3.3) umfasstt, die sowohl im Antriebszahnrad (3.1) als auch im Übertragungszahnrad (3.2) vorgesehen sind und es ermöglichen, die im Übertragungszahnrad (3.1) gebildete Rotationskraft direkt und synchron auf das Übertragungszahnrad (3.2) zu übertragen.

5. Wischermechanismus (1) nach Anspruch 1, **gekennzeichnet durch** ein Set von Wellen (4), die in das Hauptwellenlager (3.2.1) eingreifen, das in der Mitte des Übertragungsgetriebes (3.2) angeordnet ist und sich synchron zu dem Übertragungsgetriebe (3.2) um ihre eigenen Achsen dreht; das ebenfalls in dem Übertragungsgetriebe (3.2) montiert ist, so dass die im Motor (2) gebildete Rotationskraft auf jeden der Wischerarme (A) übertragen ist.

6. Wischermechanismus (1) nach Anspruch 1, **gekennzeichnet durch** ein Set von Wellen (4), der eine Hauptwelle (4.1), eine Übertragungswelle (4.2) zum Anbringen an jedem Ende der Hauptwelle (4.1) und mitdrehend mit der Hauptwelle (4.1) und ein Set von Wellen (4) umfasst, zum Anordnen an jedem Ende der Getriebewellen (4.2), auf dem die Hauptwelle (4.1) nicht angeordnet ist und sich zusammen mit der Hauptwelle (4.1) dreht, und gleichzeitig trägt diese Drehbewegung auf eine andere Achse.

7. Wischermechanismus (1) nach Anspruch 6, **gekennzeichnet durch** ein Set von Wellen (4) umfassend ein Schneckengetriebe (4.3), an dem Shraubengewinde (4.3.1) vorgesehen sind und das sich beim Drehen um die eigene Achse die Shraubengewinde (4.3.1) und das Stirnrad (7.1) um ihre eigene Achsen dreht.

8. Wischermechanismus (1) nach Anspruch 6, **gekennzeichnet durch** ein Set von Wellen (4), der einen Antriebsnocken (4.1.1) umfasst, der es der Hauptwelle (4.1) und dem Übertragungszahnrad (3.2) ermöglicht, synchron miteinander zu arbeiten, und der in dem Hauptwellenlager (3.2.1) und der Hauptwelle (4.1) angeordnet ist; und der auch der Hauptwelle (4.1), die in der Mitte des Übertragungszahnrades (3.2) angeordnet ist, hilft, sich zusammen mit dem Übertragungszahnrad (3.2) zu drehen.

9. Wischermechanismus (1) nach Anspruch 1, **gekennzeichnet durch** ein Set von Wellenlager (5), welches es das Set von Wellen (4) ermöglicht, sich um seine eigene Achse mittels eines oder mehreres Lagers zu drehen, die die Position beibehalten, die die durch das Set von Wellen (4) eingenommene Position zusammen mit dem Übertragungszahnrad (3.2) halten; und welches das Set von Wellen (4) einbettet, während das genannte Set von Wellen (4) unbeweglich ist.

10. Wischermechanismus (1) nach Anspruch 1, **gekennzeichnet durch** ein Gehäuse (6), welches das Set von Konusgetriebe (3) vor schädigenden Faktoren wie Staub, Schmutz usw. schützt und zwischen dem Set vom Wellenlagern (5) angeordnet ist; welches gleichzeitig das Set von Konusgetriebe (3) sowie einen Teil der Wellen (4) umschließt, verhindert das Eindringen schädigender Faktoren.

11. Wischermechanismus (1) nach Anspruch 1, **gekennzeichnet durch** einen Antriebsmechanismus (7), der die auf den Antriebsmechanismus (4) übertragene Drehkraft über den Motor (2) auf die Wischerarme (A) überträgt und der ein Stirnrad (7.1) und ein Ritzel (7.2) umfasst.

12. Wischermechanismus (1) nach Anspruch 1, **gekennzeichnet durch** einen Antriebsmechanismus (7) mit einem Stirnrad (7.1), das in dem Antriebsmechanismus (7) angeordnet ist und direkt auf dem Schneckengetriebe (4.3) sitzt; das ebenfalls direkt in Kontakt mit den in dem Schneckengetriebe (4.3) angeordneten Schraubengewinden (4.3.1) steht und sich aufgrund der mittels dieser Schraubengewinde (4.3.1) übertragenen Kraft um seine eigene Achse dreht.

13. Wischermechanismus (1) nach Anspruch 1, **gekennzeichnet durch** einen Antriebsmechanismus (7), der ein Ritzel (7.2) umfasst, das in der Mitte des Stirnrads (7.1) angeordnet ist und sich zusammen mit dem rotierenden Stirnrad (7.1) mit der gleichen Winkelgeschwindigkeit wie dieses und synchron zu diesem dreht, und gleichzeitig die Drehkraft, die es vom Stirnrad (7.1) erhält, direkt auf den Wischerarm (A) überträgt.

14. Wischermechanismus (1) nach Anspruch 1, **gekennzeichnet durch** einen Antriebsmechanismus (7), der ein Ritzel (7.2) umfasst, das konische Gewinde aufweist, das mit dem Wischerarm (A) an einer Seite desselben verbunden ist, wodurch beim Drehen des Ritzels um seine eigene Achse der Wischerarm (A) auch in der Lage ist, sich um die Achse zu drehen, die seine Mitte in einem bevorzugten Winkel schneidet.

## Revendications

1. Mécanisme d'essuie-glace (1) qui est formé pour essuyer les pare-brise des véhicules et qui, en nettoyant la vitre dans des conditions météorologiques pluvieuses et neigeuses, empêche de bloquer la vue du conducteur, **comprenant** principalement :
- au moins un moteur (2) qui entraîne chaque bras d'essuie-glace (A) et leur permet ainsi de se déplacer,
- au moins un jeu d'engrenages coniques (3) qui comporte un engrenage d'entraînement (3.1) relié au moteur (2) et tournant autour de son propre axe entraîné par le moteur (2), et qui comprend également un engrenage de transmission (3.2) qui tourne en synchronisation avec l'engrenage d'entraînement (3.1) en étant positionné à 90° par rapport à l'axe central dudit engrenage d'entraînement (3.1), et **caractérisé par**
- au moins un jeu d'arbres (4) qui est situé dans le palier d'arbre principal (3.2.1) disposé dans la partie centrale de l'engrenage de transmission (3.2) et tourne autour de son propre axe en synchronisation avec l'engrenage de transmission (3.2), et qui est en même temps muni d'un engrenage à vis sans fin (4.3) à ses deux extrémités, et
- un mécanisme d'entraînement (7) qui est entraîné par le mouvement de rotation formé dans l'engrenage à vis sans fin (4.3), et qui fait également tourner le bras d'essuie-glace (A) angulairement autour de l'axe central d'engrenage à pignons (7.2) par l'intermédiaire d'un engrenage droit (7.1) mise en rotation par l'engrenage à vis sans fin (4.3) et d'un engrenage à pignons (7.2) disposé au centre de ledit engrenage droit (7.1).

2. Mécanisme d'essuie-glace (1) selon la revendication 1, **caractérisé par** un jeu d'engrenages coniques (3) qui fonctionne en liaison avec l'arbre moteur (2.1) de sorte que l'entraînement obtenu du moteur (2) par l'intermédiaire de l'arbre moteur (2.1) sera dirigé d'un axe à l'autre.

3. Mécanisme d'essuie-glace (1) selon la revendication 1, **caractérisé par** un jeu d'engrenages coniques (3) dont l'axe est disposé dans un axe perpendiculaire à l'axe central de l'engrenage d'entraînement (3.1) et qui comprend un palier d'arbre principal (3.2.1) dans sa partie centrale, et qui comprend également un engrenage de transmission (3.2) qui, lorsque le pignon d'entraînement (3.1) tourne en étant entraîné par le moteur (2), tourne à la même vitesse angulaire que le pignon d'entraînement (3.1) et en synchronisation avec celui-ci et par lequel la force de rotation formée dans l'axe du pignon d'entraînement (3.1) est transmise.

4. Mécanisme d'essuie-glace (1) selon la revendication 1, **caractérisé par** un jeu d'engrenages coniques (3) qui comprend des filets coniques (3.3) prévus à la fois dans l'engrenage d'entraînement (3.1) et dans l'engrenage de transmission (3.2) et assurant que la force de rotation formée dans l'engrenage de transmission (3.1) est directement et synchroniquement transférée à l'engrenage de transmission (3.2).

5. Mécanisme d'essuie-glace (1) selon la revendication 1, **caractérisé par** un jeu d'arbres (4) engagés dans le palier d'arbre principal (3.2.1) disposé au centre d'engrenage de transmission (3.2) et tournant autour de leurs propres axes en synchronisation avec l'engrenage de transmission (3.2) ; qui est également monté dans l'engrenage de transmission (3.2) de sorte que la force de rotation formée dans le moteur (2) est transférée à chacun des bras d'essuie-glace (A).

6. Mécanisme d'essuie-glace (1) selon la revendication 1, **caractérisé par** un jeu d'arbres (4) comprenant un arbre principal (4.1), un arbre de transmission (4.2) destiné à être monté dans chaque extrémité de l'arbre principal (4.1) et à tourner avec l'arbre principal (4.1), et un engrenage à vis sans fin (4) destiné à être situé à chaque extrémité des arbres de transmission (4.2) sur lesquels l'arbre principal (4.1) n'est pas disposé et à tourner avec l'arbre principal (4.1), et en même temps à porter ce mouvement de rotation sur un axe différent.

7. Mécanisme d'essuie-glace (1) selon la revendication 6, **caractérisé par** un jeu d'arbres (4) comprenant un engrenage à vis sans fin (4.3) sur laquelle sont prévus des filets hélicoïdaux (4.3.1) et qui, en cas de rotation autour de son propre axe, fait tourner les filets hélicoïdaux (4.3.1) et l'engrenage droit (7.1) autour de leurs propres axes.

8. Mécanisme d'essuie-glace (1) selon la revendication 6, **caractérisé par** un jeu d'arbres (4) comprenant une came d'entraînement (4.1.1) qui permet à l'arbre principal (4.1) et à l'engrenage de transmission (3.2) de fonctionner en synchronisation l'un avec l'autre et qui est située dans le palier d'arbre principal (3.2.1) et l'arbre principal (4.1) ; et qui aide également l'arbre principal (4.1) situé au centre de l'engrenage de transmission (3.2) à tourner avec l'engrenage de transmission (3.2).

9. Mécanisme d'essuie-glace (1) selon la revendication 1, **caractérisé par** un jeu de paliers d'arbres (5) qui permet au jeu d'arbres (4) de tourner autour de ses propres axes au moyen d'un ou plusieurs paliers maintenant la position prise par le jeu d'arbres (4) avec l'engrenage de transmission (3.2) ; et qui embarque le jeu d'arbres (4) pendant que ledit jeu d'arbres (4) est immobile.

10. Mécanisme d'essuie-glace (1) selon la revendication 1, **caractérisé par** un boîtier (6) qui protège le jeu d'engrenages coniques (3) contre les facteurs de détérioration tels que la poussière, la saleté, etc. et qui est situé entre le jeu de paliers d'arbres (5) ; qui enferme en même temps le jeu d'engrenages coniques (3) ainsi qu'une partie du jeu d'arbres (4), empêchant les facteurs de détérioration d'y pénétrer.

11. Mécanisme d'essuie-glace (1) selon la revendication 1, **caractérisé par** un mécanisme d'entraînement (7) qui transmet la force de rotation transférée au jeu d'arbres (4) par l'intermédiaire du moteur (2), aux bras d'essuie-glace (A) et qui comprend un engrenage droit (7.1) et un engrenage à pignons (7.2).

12. Mécanisme d'essuie-glace (1) selon la revendication 1, **caractérisé par** un mécanisme d'entraînement (7) comprenant un engrenage droit (7.1) qui est disposé dans le mécanisme d'entraînement (7) et se trouve directement sur l'engrenage à vis sans fin (4.3) ; qui est également directement en contact avec les filets hélicoïdaux (4.3.1) disposés dans l'engrenage à vis sans fin (4.3) et tourne autour de son propre axe en raison de la force transférée au moyen de ces filets hélicoïdaux (4.3.1).

13. Mécanisme d'essuie-glace (1) selon la revendication 1, **caractérisé par** un mécanisme d'entraînement (7) comprenant un engrenage à pignons (7.2) qui est disposé au centre de l'engrenage droit (7.1) et tourne avec l'engrenage droit (7.1) en rotation à la même vitesse angulaire que celle-ci et en synchronisation avec elle, et transmet en même temps la force de rotation qu'il reçoit de l'engrenage droit (7.1) directement au bras d'essuie-glace (A).

14. Mécanisme d'essuie-glace (1) selon la revendication 1, **caractérisé par** un mécanisme d'entraînement (7) comprenant un engrenage à pignons (7.2) qui présente des filets coniques reliés au bras d'essuie-glace (A) sur un de ses côtés, de sorte que, en cas de rotation du pignon autour de son propre axe, le bras d'essuie-glace (A) est également capable de tourner autour de l'axe coupant son centre selon un angle préféré.
